# EUROPÄISCHE PATENTSCHRIFT

(11) **EP 4 296 415 B1**
(45) Veröffentlichungstag und Bekanntmachung des Hinweises auf die Patenterteilung: **03.06.2026**
(21) Anmeldenummer: 23179188.0
(22) Anmeldetag: 14.06.2023
(51) Int. Cl.: D01H 13/00, F03D 9/34

(54) **TEXTILMASCHINE MIT EINER ENERGIERÜCKGEWINNUNGSEINHEIT**
TEXTILE MACHINE WITH AN ENERGY RECOVERY UNIT
MACHINE TEXTILE DOTÉE D'UNE UNITÉ DE RÉCUPÉRATION D'ÉNERGIE

(30) Priorität: 23.06.2022 LU 502348
(43) Veröffentlichungstag der Anmeldung: 27.12.2023
(73) Patentinhaber: Saurer Spinning Solutions GmbH & Co. KG, 52531 Übach-Palenberg (DE)
(72) Erfinder: Spitzer, Michael, 52156 Monschau-Kalterherberg (DE); Thomas, Sebastian, 41189 Mönchengladbach (DE)
(74) Vertreter: Schniedermeyer, Markus

(56) Entgegenhaltungen:
- WO-A2-2009/136413
- CH-A2- 716 035
- DE-A1- 102011 114 479
- DE-A1- 3 910 183
- IT-A1- PN20 110 077
- US-B2- 10 670 297
- DEGEFA MEHARI WELDEMARIAM ET AL: "(PDF) Energy recovery from exhaust air of textile industry", 30 August 2014 (2014-08-30), pages 2 - 6, XP093094588, Retrieved from the Internet <URL:https://www.researchgate.net/publication/324481992_Energy_recovery_from_exhaust_air_of_textile_industry> [retrieved on 20231024], DOI: 10.11648/j.ijrse.20140304.12

## Beschreibung

Die Erfindung betrifft eine mehrere Arbeitsstellen zur Verarbeitung von Fasern und/oder Fäden aufweisende Textilmaschine mit mindestens einem zentralen luftdurchströmten Aggregat, das als Sauganlage zur Erzeugung eines Unterdrucks ausgebildet ist.

Unter Textilmaschinen werden im Rahmen der Erfindung solche Maschinen verstanden, die bei der Herstellung eines Fadens aus Fasern in den verschiedenen Produktionsschritten zum Einsatz kommen. Hierbei handelt es sich zum Beispiel um Kreuzspulen herstellende Textilmaschinen, wie Offenend-Rotorspinnmaschinen, Luftspinnmaschinen oder Kreuzspulautomaten.

Derartige Textilmaschinen weisen in Abhängigkeit von deren Einsatzzweck eine Vielzahl von unterschiedlichen Aggregaten auf, welchen im Rahmen der unterschiedlichen Prozesse bei der Herstellung des Fadens verschiedene Aufgaben zukommen. Eine Vielzahl dieser Aggregate verwenden dabei für ihre Funktion eine Luftströmung. Bei diesen luftdurchströmten Aggregaten kann es sich dabei sowohl um zentrale, an der Textilmaschine angeordnete Aggregate als auch um an den einzelnen Arbeitsstellen vorhandene Aggregate handeln. Solche Aggregate an den Arbeitsstellen können zum Beispiel Spinneinrichtungen sein, die einen Spinnunterdruck benötigen oder Saugdüsen, mittels der von einer Kreuzspule ein Faden zurückgeholt und zum Wiederanspinnen bereitgelegt werden kann. Eine Sauganlage zur Erzeugung des benötigten Unterdrucks ist häufig als zentrales Aggregat ausgebildet oder zumindest einer Gruppe von Arbeitsstellen zugeordnet. Auch Druckluftquellen sind häufig zentrale Aggregate, die zum Beispiel an den Arbeitsstellen Reinigungs- oder Spinndüsen mit Druckluft versorgen.

Die DE 10 2011 114 479 A1 offenbart eine als Vorspinnmaschine ausgebildete Textilmaschine mit einer Absaugeinrichtung, die über einen Saugkanal mit Unterdruck versorgt wird. Die abgelösten Verunreinigungen werden über den Saugkanal einer Entsorgungseinrichtung zugeführt. Der Saugkanal wird mittels einer Unterdruckquelle mit Unterdruck beaufschlagt. Die Unterdruckquelle weist einen Lüfter und eine elektrische Maschine auf. Die elektrische Maschine wird zum Antreiben des Lüfters als Motor betrieben. Der Lüfter weist außerdem eine Schwungmasse auf, deren kinetische Energie die Versorgung elektrischer Verbraucher bei einem Ausfall des elektrischen Versorgungsnetzes sicherstellt.

Zur Herstellung eines Über- oder Unterdrucks in den luftdurchströmten Aggregaten wird eine erhebliche Energie benötigt, die nur z. T. während des Funktionsprozesses genutzt wird. Ein Großteil der in Druckluft oder Unterdruck umgewandelten Energie geht ungenutzt verloren.

Hiervon ausgehend liegt der Erfindung die Aufgabe zugrunde, eine Textilmaschine bereitzustellen, welche eine hohe Energie-Effizienz aufweist.

Die Erfindung löst die Aufgabe durch eine Textilmaschine mit einer Energierückgewinnungseinheit mit den Merkmalen des Anspruchs 1. Vorteilhafte Weiterbildungen der Textilmaschine sind in den Ansprüchen 2 bis 8 angegeben.

Die Erfindung löst die Aufgabe durch eine Textilmaschine mit mehreren Arbeitsstellen zur Verarbeitung von Fasern und/oder Fäden, mit mindestens einem zentralen luftdurchströmten Aggregat, das als Sauganlage zur Erzeugung eines Unterdrucks ausgebildet ist, wobei in einer Abluftleitung des Aggregats eine Energierückgewinnungseinheit angeordnet ist.

Die erfindungsgemäße Textilmaschine zeichnet sich dadurch aus, dass diese durch die Verwendung der Energierückgewinnungseinheit ungenutzte Luftströmung, welche den einzelnen Aggregaten zugeführt und von diesen abgeführt wird, zur Erzeugung von elektrischer Energie nutzt. Gegenüber herkömmlichen Textilmaschinen ohne Energierückgewinnungseinheit weist die erfindungsgemäße Textilmaschine eine höhere Effizienz auf. Die elektrische Energie kann unter Verwendung entsprechender elektrischer Komponenten, z.B. der Textilmaschine, zurückgeführt oder zum Laden eines Energiespeichers genutzt werden.

Kennzeichnend für die Energierückgewinnungseinheit der erfindungsgemäßen Textilmaschine ist ein strömungstechnisch mit einer Abluftleitung des luftdurchströmten Aggregats der Textilmaschine verbindbares und durch eine Luftströmung antreibbares Rotationselement, das mit einem Generator zur Stromerzeugung verbunden ist.

Die Energierückgewinnungseinheit ist dazu ausgebildet, um mit der Abluftleitung eines luftdurchströmten Aggregats verbunden zu werden. Die das Aggregat durchströmende Luftströmung treibt das Rotationselement der Energierückgewinnungseinheit an. Über die Verbindung des Rotationselements mit dem Generator wird die Drehbewegung des Rotationselements zur Stromerzeugung genutzt.

Die Energierückgewinnungseinheit der erfindungsgemäßen Textilmaschine lässt sich in der Abluftleitung anordnen, in der in Abhängigkeit von dem jeweiligen Aggregat der Textilmaschine ein eine Luftströmung erzeugender Unterdruck herrscht. Die Luftströmung wird in erster Linie zur Funktion des Aggregats genutzt. Darüber hinaus dient die das Aggregat durchströmende Luftströmung dazu, das mit dem
Generator verbundene Rotationselement anzutreiben, um so die ungenutzte Luftströmung in elektrische Energie umzuwandeln. Diese elektrische Energie kann bspw. in die Textilmaschine zurückgeführt, in ein zentrales Unternehmensnetz eingespeist oder zum Aufladen eines Energiespeichers genutzt werden.

Die erfindungsgemäße Textilmaschine mit der Energierückgewinnungseinheit ermöglicht es somit, die ungenutzte Bewegungsenergie der Luftströmung in nutzbare Energie umzuwandeln. Die Energierückgewinnungseinheit steigert somit die Effizienz einer entsprechend ausgestalteten Textilmaschine.

Die Anordnung des Rotationselements in der Abluftleitung des erfindungsgemäß als Sauganlage ausgebildeten Aggregats ist dabei grundsätzlich frei wählbar. Nach einer besonders vorteilhaften Ausgestaltung der Erfindung ist jedoch vorgesehen, dass die Energierückgewinnungseinheit einen mit einer Abluftleitung des Aggregats verbindbaren Gehäusekörper aufweist, der einen sich von einem Gehäuseeingang bis zu einem Gehäuseausgang verbreiternden Strömungsquerschnitt aufweist. Gemäß dieser Ausgestaltung der Erfindung ist der Gehäusekörper der Energierückgewinnungseinheit nach Art eines Diffusors ausgebildet, bei dem sich in Strömungsrichtung der Öffnungsquerschnitt des von der Luftströmung durchströmten Gehäusekörpers verbreitert. Hierdurch kann an bestimmten Bereichen des Strömungsquerschnitts die Strömungsgeschwindigkeit erhöht und der statische Druck gesenkt werden, so dass an den bestimmten Bereichen des Strömungsquerschnitts eine besonders effiziente Umwandlung der Luftströmung über das Rotationselement in elektrische Energie durchgeführt werden kann. Zudem gewährleistet die Verwendung eines Gehäusekörpers in ergänzendem Maße bei einem nach einer besonders vorteilhaften Ausgestaltung im Bereich des Gehäuseausgangs angeordneten Rotationselement einen geringen Einfluss des Rotationselements auf die Luftströmung durch das Aggregat, sodass Funktionsstörungen des Aggregats aufgrund der Anordnung der Energierückgewinnungseinheit in besonders zuverlässiger Weise vermieden werden können.

Die Ausrichtung der Rotationsachse des Rotationselements, bei dem es sich grundsätzlich um ein beliebiges, durch eine Luftströmung in Rotation versetzbares Element handeln kann, wie bspw. einem Flügelrad, ist grundsätzlich frei wählbar. So besteht die Möglichkeit, dieses derart in der Luftströmung anzuordnen, dass dessen Rotationsachse senkrecht oder parallel zur Längsachse des Gehäusekörpers ausgerichtet ist. Nach einer besonders vorteilhaften Ausgestaltung der Erfindung ist jedoch vorgesehen, dass sich die Rotationsachse des Rotationselements in einer Ebene erstreckt, die nicht senkrecht oder parallel zur Längsachse des Gehäusekörpers verläuft. Besonders vorteilhafterweise ist dabei vorgesehen, dass die Rotationsachse derart angeordnet ist, dass diese sich selbständig über den Luftstrom oder gesteuert ausrichtet.

Diese Ausgestaltung der Erfindung gewährleistet, insbesondere bei der vorteilhafterweise vorgesehenen Verwendung eines Gehäusekörpers mit einem sich verbreiternden Strömungsquerschnitts, dass das Rotationselement in optimaler Weise zu der sich in dem Gehäusekörper einstellenden Luftströmung ausgerichtet ist, wodurch in einer ergänzenden Weise die Effizienz der Energierückgewinnung über den mit dem Rotationselement verbundenen Generator gesteigert werden kann. Die selbsttätige Ausrichtung der Rotationsachse gegenüber dem Luftstrom kann dabei bspw. durch eine entsprechende flexible Lagerung der Rotationsachse an dem Gehäusekörper realisiert werden. Eine gesteuerte Ausrichtung der Rotationsachse kann mittels eines Stellantriebes in Verbindung mit einem Sensor erfolgen.

Nach einer weiteren Ausgestaltung der Erfindung ist vorgesehen, dass der Gehäusekörper ein sich im Bereich zwischen dem Gehäuseeingang und dem Gehäuseausgang erstreckendes, die Luftströmung durch den Gehäusekörper aufteilendes Leitblech aufweist und das Rotationselement im Bereich zwischen dem Leitblech und einer Gehäusewand des Gehäusekörpers angeordnet ist. Gemäß dieser Ausgestaltung der Erfindung wird mittels eines Leitblechs ein definierter Teil des aus dem Aggregat zugeführten Luftstroms zum Antrieb des Rotationselements genutzt. Diese Ausgestaltung der Erfindung gewährleistet in besonders zuverlässiger Weise, dass es durch die Energierückgewinnung nicht zu einer Beeinträchtigung der Funktion des luftdurchströmten Aggregats der Textilmaschine und/oder der Arbeitsstelle kommt. Das Leitblech, das bevorzugt parallel zu einer Gehäusewand des Gehäusekörpers angeordnet ist, kann dabei unmittelbar an den Gehäuseeingang und den Gehäuseausgang angrenzen oder sich nur über einen Teilbereich zwischen dem Gehäuseeingang und dem Gehäuseausgang erstrecken.

Nach einer weiteren Ausgestaltung der Erfindung ist vorgesehen, dass die Gehäusewand eine Öffnung aufweist und das Rotationselement derart außenseitig am Gehäusekörper im Bereich der Öffnung angeordnet ist, dass eine den Gehäusekörper durchströmende Luftströmung eine das Rotationselement antreibende Sogströmung erzeugt.

Gemäß dieser Ausgestaltung der Erfindung ist das Rotationselement nicht im unmittelbaren Luftstrom angeordnet, sondern derart außenseitig im Bereich der Gehäuseöffnung angeordnet, dass es durch die Sogströmung angetrieben wird, die aufgrund der das Gehäuse durchströmenden Luft im Bereich der Gehäuseöffnung erzeugt wird. Diese Ausgestaltung der Erfindung ermöglicht eine gute Zugänglichkeit zum Rotationselement im Falle erforderlicher Instandhaltungs- oder Instandsetzungsarbeiten. Zudem kann in einfacher Weise über eine vorteilhafterweise vorgesehene Einstellung der Öffnungsgröße die auf das Rotationselement wirkende Sogströmung variiert und so die Energierückgewinnung geregelt werden. Auch stellt diese Ausgestaltung der Erfindung in besonders zuverlässiger Weise sicher, dass es durch die Energierückgewinnungseinheit nicht zu einer Funktionsbeeinträchtigung der luftdurchströmten Aggregate kommt.

Gemäß einer bevorzugten Ausführungsform der erfindungsgemäßen Textilmaschine ist die Abluftleitung des Aggregats, in der die Energierückgewinnungseinheit angeordnet ist, als ein sich in Längsrichtung der Textilmaschine erstreckender Kanal ausgebildet. Solche Kanäle sind grundsätzlich bekannt und können sich über die gesamte Länge der Textilmaschine erstrecken. Bei den Kanälen kann es sich vorzugsweise um die Abluftleitung einer Sauganlage handeln. Die maschinenlangen Kanäle können die Aggregate der Arbeitsstellen mit Unterdruck versorgen. Die Kanäle sind besonders geeignet für die Anordnung einer oder mehrerer Energierückgewinnungseinheiten, da sie einen besonders großen Luftdurchsatz aufweisen. Ausführungsbeispiele der Erfindung werden nachstehend mit Bezug auf die Zeichnung erläutert. In den Zeichnungen zeigen:
- Fig. 1: in einer schematischen, perspektivischen Darstellung eine Energierückgewinnungseinheit mit einem als Flügelrad ausgebildeten Rotationselement;
- Fig. 2: in einer schematischen, perspektivischen Darstellung eine erste Ausführungsform eines Gehäusekörpers zur Anordnung an einer Abluftleitung eines luftdurchströmten Aggregats;
- Fig. 3: in einer schematischen Darstellung eine Seitenansicht des Gehäusekörpers von Figur 2 mit einem Rotationselement einer Energierückgewinnungseinheit;
- Fig. 4: in einer schematischen Darstellung eine zweite Ausführungsform eines Gehäusekörpers mit einem Rotationselement;
- Fig. 5: in einer schematischen Darstellung eine dritte Ausführungsform eines Gehäusekörpers mit einem Rotationselement.

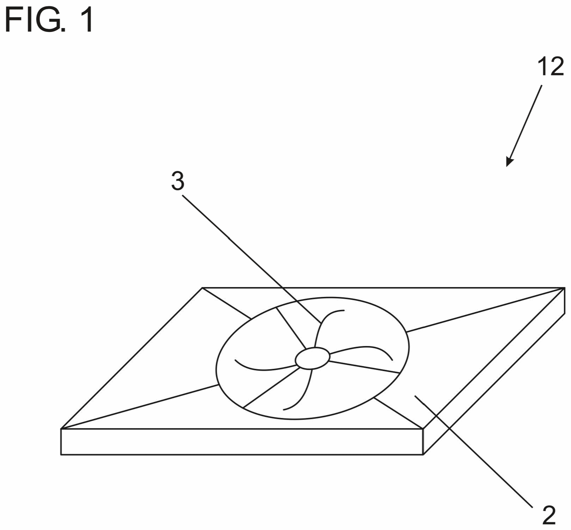

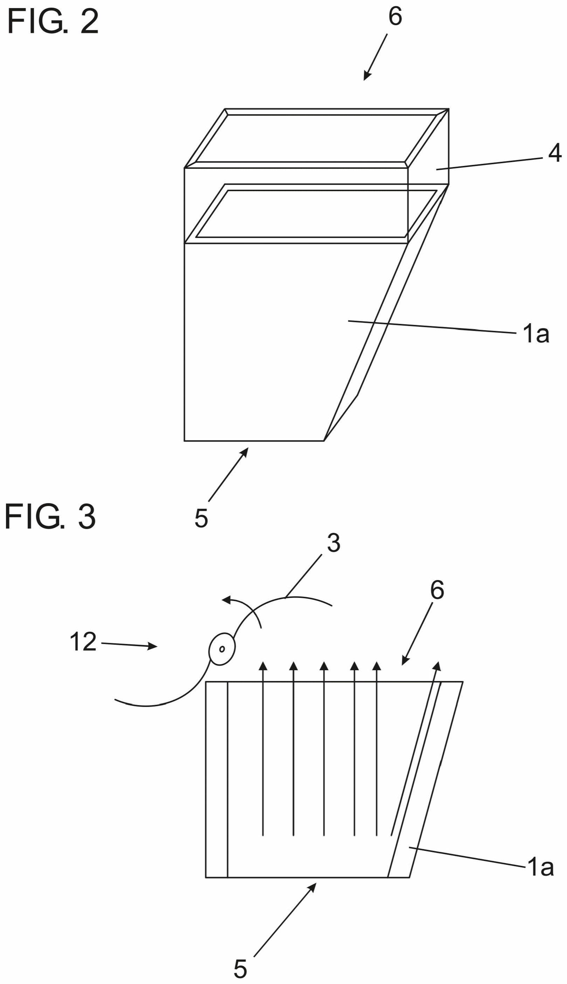

In Figur 1 ist in einer schematischen Darstellung eine Energierückgewinnungseinheit 12 mit einem an einem Rahmenkörper 2 angeordneten, als Flügelrad 3 ausgebildeten Rotationselement dargestellt. Der Rahmenkörper 2 der Energierückgewinnungseinheit 12 lässt sich bspw. an einem Tragrahmen 4 eines in Figur 2 dargestellten Gehäusekörpers 1a anordnen, welcher über einen Gehäuseeingang 5 mit einer hier nicht dargestellten Abluftleitung eines hier ebenfalls nicht dargestellten luftdurchströmten Aggregats verbunden werden kann. Ausgehend von dem Gehäuseeingang 5 verbreitert sich der Öffnungsquerschnitt des Gehäusekörpers 1a bis zum Gehäuseausgang 6.

Der Gehäusekörper 1a fungiert aufgrund seines sich vom Gehäuseeingang 5 bis zum Gehäuseausgang 6 verbreiternden Querschnitts als Diffusor, wodurch die Strömungsgeschwindigkeit der diesen durchströmenden Luft reduziert und der statische Druck erhöht wird, sodass in besonders zuverlässiger Weise ein Antrieb des Rotationselements 3 erfolgen kann, welches bevorzugt im Bereich des Gehäuseausgangs 6 angeordnet ist (vgl. Figur 3). Die Rotationsenergie des Rotationselements 3 wird über einen mit dem Rotationselement 3 verbundenen, hier nicht dargestellten Generator in elektrische Energie umgewandelt, die beliebig nutzbar ist.

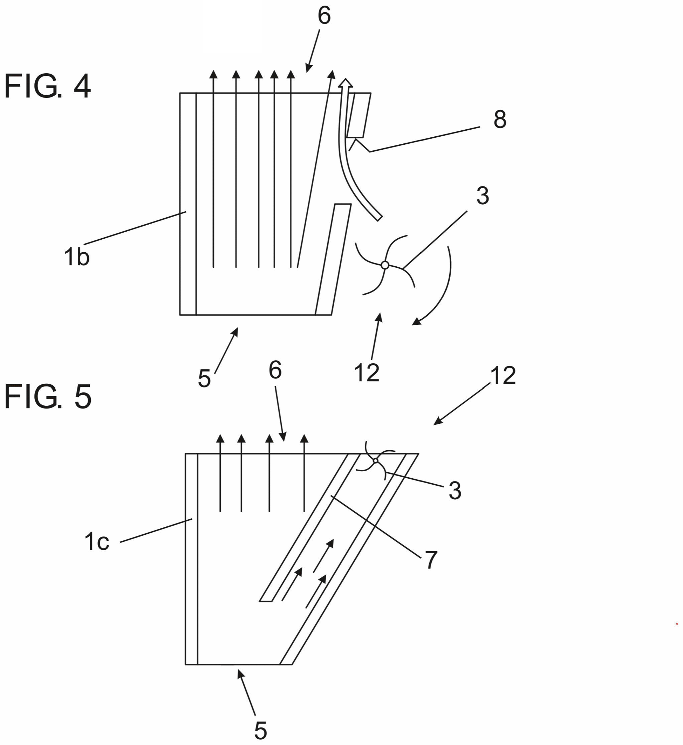

Eine weitere Ausführungsform eines Gehäusekörpers 1b ist in Figur 4 dargestellt. Bei dieser Ausführungsform weist der Gehäusekörper 1b eine seitliche Gehäuseöffnung 8 auf. Die den Gehäusekörper 1b von dem Gehäuseeingang 5 bis zum Gehäuseausgang 6 durchströmende Luftströmung erzeugt außerhalb des Gehäusekörpers 1b im Bereich der Gehäuseöffnung 8 eine Sogströmung, welche ein dort angeordnetes Flügelrad 3 der Energierückgewinnungseinheit 12 antreibt.

In einer weiteren Ausgestaltung des Gehäusekörpers 1c weist dieser ein Leitblech 7 auf, das sich ausgehend von dem Gehäuseausgang 6 in Richtung auf den Gehäuseeingang 5 erstreckt. Über das Leitblech 7 wird ein Teil der den Gehäusekörper 1c durchströmenden Luftströmung abgeteilt und zwischen dem Leitblech 7 und der Gehäusewand der Energierückgewinnungseinheit 12 zugeführt (vgl. Figur 5).

### Bezugszeichenliste

- 1a, 1b, 1c: Gehäusekörper
- 2: Rahmenkörper
- 3: Rotationselement/Flügelrad
- 4: Tragrahmen
- 5: Gehäuseeingang
- 6: Gehäuseausgang
- 7: Leitblech
- 8: Gehäuseöffnung
- 12: Energierückgewinnungseinheit

## Patentansprüche

1. Textilmaschine mit mehreren Arbeitsstellen zur Verarbeitung von Fasern und/oder Fäden, mit mindestens einem zentralen luftdurchströmten Aggregat (11), das als Sauganlage zur Erzeugung eines Unterdrucks ausgebildet ist,
**gekennzeichnet durch**
eine mit einer Abluftleitung des Aggregats verbundenen Energierückgewinnungseinheit (12), die ein durch eine Luftströmung angetriebenes Rotationselement (3) aufweist, das mit einem Generator zur Stromerzeugung verbunden ist.

2. Textilmaschine nach Anspruch 1, **dadurch gekennzeichnet, dass** die Energierückgewinnungseinheit (12) einen mit der Abluftleitung des Aggregats (11) verbundenen Gehäusekörper (1a, 1b, 1c) umfasst, der einen sich von einem Gehäuseeingang (5) bis zu einem Gehäuseausgang (6) verbreiternden Strömungsquerschnitt aufweist.

3. Textilmaschine nach Anspruch 2, **dadurch gekennzeichnet, dass** das Rotationselement (3) im Bereich des Gehäuseausgangs (6) angeordnet ist.

4. Textilmaschine nach einem oder mehreren der vorhergehenden Ansprüche, **dadurch gekennzeichnet, dass** sich die Rotationsachse des Rotationselements (3) in einer von einer senkrecht und parallel zur Strömungsrichtung abweichend ausgerichteten Ebene erstreckt.

5. Textilmaschine nach einem oder mehreren der vorhergehenden Ansprüche, **dadurch gekennzeichnet, dass** die Rotationsachse derart angeordnet ist, dass diese sich selbsttätig oder gesteuert gegenüber dem Luftstrom ausrichtet.

6. Textilmaschine nach einem oder mehreren der Ansprüche 2 bis 5, **dadurch gekennzeichnet, dass** der Gehäusekörper (1c) ein sich im Bereich zwischen dem Gehäuseeingang (5) und dem Gehäuseausgang (6) erstreckendes, die Luftströmung durch den Gehäusekörper (1c) aufteilendes Leitblech (7) aufweist und das Rotationselement (3) im Bereich zwischen dem Leitblech (7) und einer Gehäusewand angeordnet ist.

7. Textilmaschine nach einem oder mehreren der Ansprüche 2 bis 5, **dadurch gekennzeichnet, dass** eine Gehäusewand eine Gehäuseöffnung (8) aufweist und das Rotationselement (3) derart außenseitig am Gehäusekörper (1b) im Bereich der Gehäuseöffnung (8) angeordnet ist, dass eine den Gehäusekörper (1b) durchströmende Luftströmung eine das Rotationselement (3) antreibende Sogströmung erzeugt.

8. Textilmaschine nach einem oder mehreren der vorhergehenden Ansprüche, **dadurch gekennzeichnet, dass** die Abluftleitung des Aggregats, in der die Energierückgewinnungseinheit (12) angeordnet ist, als ein sich in Längsrichtung der Textilmaschine erstreckender Kanal ausgebildet ist.

## Claims

1. Textile machine having a plurality of workstations for processing fibres and/or threads and having at least one unit (11) through which air flows, located centrally, which is designed as a suction system for generating a vacuum,
**characterised by**
an energy recovery device (12) connected to an exhaust air line of the unit and having a rotational element (3), which can be driven by an air flow and is connected to a generator for electricity generation.

2. Textile machine according to claim 1, **characterised in that** the energy recovery device (12) comprises a housing body (1a, 1b, 1c) which is connected to the exhaust air line of the unit (11) and which has a flow cross-section which widens from a housing inlet (5) up to a housing outlet (6).

3. Textile machine according to claim 2, **characterised in that** the rotational element (3) is arranged in the region of the housing outlet (6).

4. Textile machine according to one or more of the preceding claims, **characterised in that** the axis of rotation of the rotational element (3) extends in a plane which is not oriented perpendicularly or parallel to the flow direction.

5. Textile machine according to one or more of the preceding claims, **characterised in that** the axis of rotation is arranged in such a way that it is oriented relative to the air flow independently or by control.

6. Textile machine according to one or more of claims 2 to 5, **characterised in that** the housing body (1c) has a guide plate (7), which extends in the region between the housing inlet (5) and the housing outlet (6) and divides the air flow through the housing body (1c), and the rotational element (3) is arranged in the region between the guide plate (7) and a housing wall.

7. Textile machine according to one or more of claims 2 to 5, **characterised in that** a housing wall has a housing opening (8) and the rotational element (3) is arranged on the outside of the housing body (1b) in the region of the housing opening (8) in such a way that an air flow flowing through the housing body (1b) produces a suction flow which drives the rotational element (3).

8. Textile machine according to one or more of the preceding claims, **characterised in that** the exhaust air line which belongs to the unit and in which the energy recovery device (12) is arranged is in the form of a duct extending in the longitudinal direction of the textile machine.

## Revendications

1. Machine textile comportant plusieurs postes de travail pour le traitement de fibres et/ou de fils, avec au moins un agrégat central (11) traversé par un flux d'air, qui est conçu comme une installation d'aspiration pour la génération d'une dépression,
**caractérisée par**
une unité de récupération d'énergie (12) reliée à une conduite d'air vicié de l'agrégat, laquelle comprend un élément rotatif (3) entraîné par un courant d'air, qui est relié à un générateur pour la production de courant électrique.

2. Machine textile selon la revendication 1, **caractérisée en ce que** l'unité de récupération d'énergie (12) comprend un corps de boîtier (1a, 1b, 1c) relié à la conduite d'air vicié de l'agrégat (11), lequel présente une section d'écoulement s'élargissant d'une entrée de boîtier (5) jusqu'à une sortie de boîtier (6).

3. Machine textile selon la revendication 2, **caractérisée en ce que** l'élément rotatif (3) est disposé dans la zone de la sortie de boîtier (6).

4. Machine textile selon l'une ou plusieurs des revendications précédentes, **caractérisée en ce que** l'axe de rotation de l'élément rotatif (3) s'étend dans un plan orienté de manière ni perpendiculaire ni parallèle à la direction de l'écoulement.

5. Machine textile selon l'une ou plusieurs des revendications précédentes, **caractérisée en ce que** l'axe de rotation est disposé de telle manière qu'il s'oriente automatiquement ou de manière commandée par rapport au courant d'air.

6. Machine textile selon l'une ou plusieurs des revendications 2 à 5, **caractérisée en ce que** le corps de boîtier (1c) comprend une tôle de guidage (7) qui s'étend dans la zone entre l'entrée de boîtier (5) et la sortie de boîtier (6) et qui divise le courant d'air à travers le corps de boîtier (1c), et **en ce que** l'élément rotatif (3) est disposé dans la zone entre la tôle de guidage (7) et une paroi de boîtier.

7. Machine textile selon l'une ou plusieurs des revendications 2 à 5, **caractérisée en ce qu'**une paroi de boîtier présente une ouverture de boîtier (8) et **en ce que** l'élément rotatif (3) est disposé à l'extérieur sur le corps de boîtier (1b) dans la zone de l'ouverture de boîtier (8) de telle sorte qu'un courant d'air traversant le corps de boîtier (1b) génère un courant d'aspiration entraînant l'élément rotatif (3).

8. Machine textile selon l'une ou plusieurs des revendications précédentes, **caractérisée en ce que** la conduite d'air vicié de l'agrégat, dans laquelle est disposée l'unité de récupération d'énergie (12), est conçue comme un canal s'étendant dans la direction longitudinale de la machine textile.
